# EUROPÄISCHE PATENTSCHRIFT

(11) **EP 3 218 088 B1**
(45) Veröffentlichungstag und Bekanntmachung des Hinweises auf die Patenterteilung: **10.10.2018**
(21) Anmeldenummer: 15794859.7
(22) Anmeldetag: 04.11.2015
(51) Int. Cl.: B01D 53/52, B01D 53/58, B01D 53/62

(54) **VERFAHREN ZUR BEHANDLUNG VON SAUERGAS AUS KOKEREIEN UND ANLAGE ZUR DURCHFÜHRUNG DES VERFAHRENS**
METHOD FOR TREATING ACID GAS FROM COKE PLANTS AND SYSTEM FOR CARRYING OUT THE METHOD
PROCÉDÉ DE TRAITEMENT DE GAZ ACIDE ISSU DE COCKERIES, ET INSTALLATION DE MISE EN OEUVRE DU PROCÉDÉ

(30) Priorität: 14.11.2014 DE 102014116719
(43) Veröffentlichungstag der Anmeldung: 20.09.2017
(73) Patentinhaber: thyssenkrupp Industrial Solutions AG, 45143 Essen (DE); thyssenkrupp AG, 45143 Essen (DE)
(72) Erfinder: THIELERT, Holger, 44379 Dortmund (DE); GUETTA, Zion, 44309 Dortmund (DE)
(74) Vertreter: thyssenkrupp Intellectual Property GmbH
(86) Internationale Anmeldenummer: PCT/EP2015/075675
(87) Internationale Veröffentlichungsnummer: WO 2016/075004

(56) Entgegenhaltungen:
- EP-A1- 0 603 684
- FR-A- 901 882
- GB-A- 871 207
- US-A- 4 678 648
- US-B2- 8 673 227

## Beschreibung

Die Erfindung betrifft ein Verfahren zur Behandlung von Sauergas aus Kokereien sowie eine Anlage zur Durchführung des Verfahrens.

Das Sauergas fällt insbesondere bei einer Reinigung von Koksofengas als Nebenprodukt an und enthält als Hauptbestandteile Wasserdampf, NH₃, CO₂, H₂S und HCN. Das gasförmige Nebenprodukt kann beispielsweise zur Schwefelherstellung oder zur Herstellung von Schwefelsäure genutzt werden. Zuvor ist allerdings eine Reduzierung des H₂O-Anteils sowie der Anteile von CO₂ und NH₃ notwendig. Wenn die kondensierbaren Anteile durch Kühlung und Kondensation aus dem Sauergas abgeschieden werden, besteht die Gefahr, dass sich an den Kühlflächen der verwendeten Wärmetauscher Ablagerungen aus Ammoniumsalzen, insbesondere Ammoniumbicarbonat, bilden, welche die Strömungswege durch den Wärmetauscher blockieren. Zur Vermeidung von Ammoniumbicarbonat-Ablagerungen auf den Wärmetauscherflächen wird eine Kondensation in der Praxis daher bei hohen Temperaturen von ca. 80°C durchgeführt. Die hohe Kondensationstemperatur schränkt die Wirksamkeit der Kondensationsabscheidung ein. Hinzu kommt das Problem, dass die Kühlmittelmenge, die Kühlmittelverteilung sowie die Kühlmitteltemperatur ebenso wie der Mengenstrom des zugeführten Sauergases geregelt werden müssen, um lokale Temperaturabsenkungen im Wärmetauscher unter einen kritischen Temperaturwert, bei dem eine Abscheidung von Ammoniumbicarbonat einsetzt, zu vermeiden. Sobald es aufgrund einer ungleichmäßigen Temperaturverteilung zu lokalen Abscheidungen von Ammoniumbicarbonat an Wärmetauscherflächen kommt, setzen sich die Strömungskanäle des Wärmetauschers von den betroffenen Stellen ausgehend rasch zu und verliert der Wärmetauscher seine Wirksamkeit. Die Anlage muss abgeschaltet und der Wärmetauscher gereinigt werden.

Bei einem aus EP 603 684 A1 bekannten Verfahren zur Behandlung von Gülle werden am Kopf einer Stripkolonne ammoniakhaltige Bestandteile und CO₂-enthaltender Wasserdampf abgezogen und in einem Mischkondensator unter Bildung von Ammoniumsalzen im Kondensat kondensiert. Ein Teilstrom wird als Rückfluss der Stripkolonne zugeführt. Der Rest wird mittels eines Wirbelschicht-Wärmetauschers gekühlt und anschließend einem Fest/Flüssig-Trennapparat zugeführt, in dem ausgefällte Ammoniumsalze abgetrennt werden.

GB 871 207 A und FR 901 882 A beschreiben weitere Verfahren zur Behandlung von Sauergas aus Kokereien, die der Oberbegriff von Anspruch 1 wiedergibt.

Vor diesem technologischen Hintergrund liegt der Erfindung die Aufgabe zugrunde, ein Verfahren zur Behandlung von Sauergas aus Kokereien anzugeben, mit dem H₂O und NH₃ abgetrennt und der Anteil an CO₂ reduziert werden kann, ohne dass sich an gekühlten Wärmetauscherflächen Ablagerungen von Ammoniumsalzen, insbesondere Ammoniumbicarbonat, bilden.

Gegenstand der Erfindung und Lösung dieser Aufgabe ist ein Verfahren nach Anspruch 1.

Erfindungsgemäß wird ein Sauergasstrom mit einer im Kreis geführten Flüssigkeit gemischt und auf eine Temperatur von weniger als 60°C gekühlt. Dabei werden ammoniakhaltige Bestandteile und Wasserdampf im Kontakt mit CO₂ kondensiert und Ammoniumsalze gebildet. Anschließend wird eine gasförmige Phase abgetrennt und eine flüssige Phase nach Abtrennung ungelöster Ammoniumsalze in den Prozess zurückgeführt sowie mit dem zu behandelnden Sauergasstrom vermischt.

Bei dem erfindungsgemäßen Verfahren werden die als feste Phase anfallenden Ammoniumsalze in einer flüssigen Phase dispergiert. Die aus Kondensat bestehende flüssige Phase und die in fester Form anfallenden Ammoniumsalze bilden eine Suspension, welche die gekühlten Flächen eines Wärmetauschers bzw. Kontaktapparates überströmen. Da die ausgefällten Ammoniumsalze mit einem Flüssigkeitsstrom mitgeführt werden, kommt es zu keinen Ablagerungen an Kühlflächen. Erfindungsgemäß kann die Kondensation des Sauergases bei einer Temperatur von weniger als 60°C durchgeführt werden. Durch eine Fest/Flüssig-Trennung wird das ungelöste Ammoniumbicarbonat aus der Suspension abgeschieden, wobei lösliche Salze im Kondensat verbleiben.

Zur Vermischung des Sauergasstromes mit der im Kreis geführten Flüssigkeit wird erfindungsgemäß ein Injektor verwendet. Die Flüssigkeit besteht aus Kondensat, welches eine Temperatur von weniger als 60°C, vorzugsweise von etwa 20°C bis 40°C aufweist. In dem Injektor findet bereits eine erste Kondensation statt, wobei durch die plötzliche Temperaturabsenkung H₂O und NH₃ kondensiert werden. Es resultiert eine Mischung aus Flüssigkeit und Gas, die CO₂, H₂S und HCN als gasförmige Bestandteile mitführt.

Dem Injektor ist zweckmäßig ein Durchströmreaktor nachgeschaltet, in dem durch eine Fällungsreaktion Ammoniumsalze gebildet werden. Die Ammoniumsalze werden als dispergierte Teilchen in der Strömung mitgeführt. Als Durchströmreaktor kann ein konventioneller Wärmetauscher, z. B. ein Rohrbündelwärmetauscher, verwendet werden. Das Flüssig/Gas-Gemisch wird in dem Durchströmreaktor vorzugsweise auf eine Temperatur zwischen 20°C und 40°C gekühlt. Eine Austrittstemperatur von weniger als 25°C wird bevorzugt, um bei einer nachfolgenden Abtrennung der gasförmigen Phase einen Stoffübergang von NH₃ in die Gasphase zu vermeiden.

Das aus Kondensat, festen Ammoniumsalzen und einer gasförmigen Phase bestehende mehrphasige Fluid wird nach dem Austritt aus dem Durchströmreaktor einem Flashbehälter zugeführt, in dem die gasförmige Phase von der Flüssig/Festphase getrennt wird.

Die als Feststoffe vorliegenden Ammoniumsalze können durch Sedimentation, Zentrifugieren, Zyklonabscheidung, Filtration oder durch einen zwei- oder mehrstufigen Prozess unter Verwendung der vorgenannten Grundoperationen abgetrennt werden.

Das erfindungsgemäße Verfahren eignet sich zur Behandlung von Sauergas aus Kokereien. Insbesondere kann es zur Behandlung eines Gasstromes eingesetzt werden, welches als Kopfprodukt aus einer Desorptionskolonne abgezogen wird, in der eine zur Gaswäsche von Koksofengas verwendete Waschflüssigkeit durch Strippen mit Wasserdampf regeneriert wird. Das Sauergas enthält als Hauptbestandteile insbesondere Wasserdampf, NH₃, CO₂, H₂S und HCN. Als feste Phase wird Ammoniumbicarbonat (NH₄HCO₃) abgetrennt. Die von der Suspension abgetrennte gasförmige Phase enthält im Wesentlichen H₂S, CO₂ und HCN und kann als Edukt in einem Claus-Prozess zur Schwefelerzeugung oder als Edukt zur Erzeugung von Schwefelsäure verwendet werden.

Das im erfindungsgemäßen Verfahren gebildete und aus dem Prozess abgeschiedene Ammoniumbicarbonat kann als Wertstoff, z. B. als Düngemittel, genutzt werden. Durch die Bildung und Abscheidung von Ammoniumbicarbonat wird ferner der H₂O-,NH₃- und CO₂-Gehalt des Sauergases reduziert. Nachgeschaltete Verfahren zur Schwefelerzeugung oder zur Erzeugung von Schwefelsäure können wirtschaftlicher betrieben werden, da die eine Verbrennung hemmenden Komponenten H₂O und CO₂ entfernt worden sind. Vorteilhaft ist auch, dass durch das erfindungsgemäße Behandlungsverfahren der Volumenstrom an Sauergas, der einer weiteren Verwertung zugeführt werden muss, um ca. 20% reduziert werden kann.

Das erfindungsgemäße Behandlungsverfahren wirkt sich ferner vorteilhaft auf die Schwefelausbeute in einem nachgeschalteten Claus-Prozess aus. Der Claus-Prozess ist ein verbreitetes Entschwefelungsverfahren zur Erzeugung von Schwefel aus Sauergasen. Die chemische Reaktion zur Erzeugung von Schwefel in diesem Verfahren kann durch die folgende Gleichgewichtsreaktion beschrieben werden:

2H₂S + SO₂ ↔ 3S + 2H₂O

Durch eine Vorbehandlung des Sauergases nach dem erfindungsgemäßen Verfahren vergrößert sich der H₂S-Gehalt des Sauergases und nimmt die Konzentration an H₂O ab. Dadurch verlagert sich die Gleichgewichtsreaktion zu Gunsten der Schwefelbildung und kann der Wirkungsgrad des Claus-Prozesses verbessert werden.

Das erfindungsgemäße Verfahren der Sauergasbehandlung ist auch vorteilhaft, wenn das Sauergas als Edukt zur Schwefelsäureherstellung verwendet werden soll. Die Schwefelsäureherstellung läuft nach den folgenden Reaktionsgleichungen ab:

H₂S + O₂ ↔ SO₂ + H₂O (Verbrennung)

2SO₂ + O₂ ↔ 2SO₃ (katalytische Umwandlung)

SO₃ + H₂O → H₂SO₄ (Absorption).

Der Wasserdampfanteil des Sauergases reduziert die Schwefelsäurekonzentration, da die Absorption mit einer Kondensation sowohl von H₂SO₄ als auch von H₂O verbunden ist. Durch die Reduzierung des H₂O-Anteils im Sauergas kann die Schwefelsäurekonzentration im Produktstrom angehoben werden.

Gegenstand der Erfindung ist auch eine Anlage nach Anspruch 12 zur Durchführung des beschriebenen Verfahrens. Die nachgeordneten Ansprüche 13 bis 17 betreffen vorteilhafte Ausgestaltungen der Anlage.

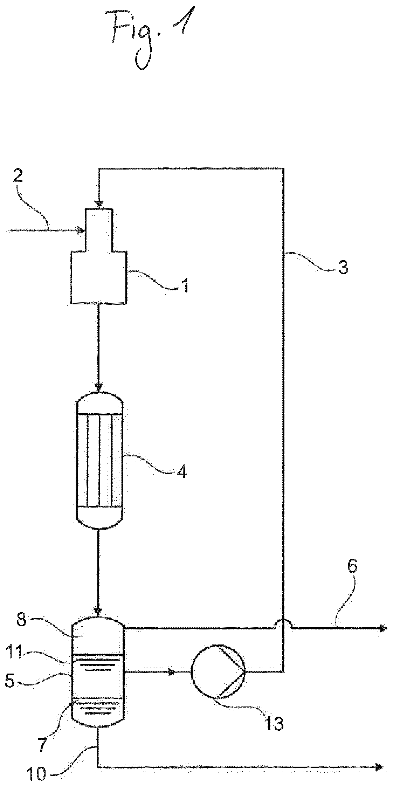

Im Folgenden wird die Erfindung anhand einer lediglich ein Ausführungsbeispiel darstellenden Zeichnung erläutert. Die einzige Figur zeigt schematisch eine Anlage zur Behandlung eines Sauergasstromes, der beispielsweise bei der Reinigung von Koksofengas als Nebenprodukt anfällt und als Hauptbestandteile Wasserdampf, NH₃, CO₂, H₂S und HCN enthält.

Die in der Figur dargestellte Anlage umfasst eine Mischeinrichtung 1 in Form eines Injektors, die einen Gaseinlass für Sauergas 2 und einen Flüssigkeitsanschluss für die Zuführung einer im Kreis geführten Flüssigkeit 3 aufweist, einen der Mischeinrichtung 1 nachgeschalteten kühlbaren Kontaktapparat 4, einen dem Kontaktapparat nachgeschalteten Trennapparat 5 zur Abtrennung einer gasförmigen Phase 6 sowie eine Einrichtung 7 zur Abtrennung von Feststoffen aus der flüssigen Phase, die im Ausführungsbeispiel mit dem Trennapparat 5 zur Abtrennung der gasförmigen Phase 6 verbunden ist. Der Kontaktapparat 4 ist als Durchströmreaktor ausgebildet und weist einen von gekühlten Wandflächen begrenzten Reaktionsraum auf, wobei die Wandflächen von eine Kühlmedium beaufschlagt sind. Der Kontaktapparat 4 kann beispielsweise als Plattenwärmetauscher oder Rohrbündelwärmetauscher ausgebildet sein. Er wird von einer Gas/Flüssig-Phase durchströmt, wobei bei der Durchströmung der Mischphase innerhalb des Kontaktapparates 4 Ammoniumsalze gebildet werden, die in der Flüssigphase dispergiert sind und als suspendierte Teilchen mitgeführt werden.

Der Trennapparat 5 zur Abtrennung der gasförmigen Phase 6 ist als Flashbehälter ausgebildet, der in einem oberen Abschnitt einen Gasraum 8 mit einem Gasauslass zur Ableitung der gasförmigen Phase 6 aufweist.

Die Einrichtung 7 zum Abtrennen von Feststoffen aus der flüssigen Phase ist als Sedimentationsabscheider ausgebildet. Im Ausführungsbeispiel weist der Flashbehälter einen als Sedimentationsabscheider ausgebildeten Flüssigkeitsraum auf, wobei an der Unterseite des Flüssigkeitsraum ein Fest/Flüssig-Gemisch 10 mit hoher Feststoffkonzentration abziehbar ist. Aus einer oberen Zone 11 des Flüssigkeitsraums kann eine geklärte Flüssigkeit entnommen werden. An einen Behälteranschluss für die geklärte Flüssigkeit ist eine Einrichtung 13 zur Flüssigkeitsrückführung angeschlossen, welche die flüssige Phase nach Abtrennung von ungelösten Ammoniumsalzen der Mischeinrichtung 1 zuführt. Die Abtrennung der ungelösten Ammoniumsalze erfolgt durch Ausschleusen des Fest/Flüssig-Gemisches 10.

Der in die Mischeinrichtung 1 eintretende Sauergasstrom 2 wird mit einer im Kreis geführten Flüssigkeit 3 gemischt und auf eine Temperatur von weniger als 60°C gekühlt. Die Flüssigkeit 3 besteht aus Kondensat, welches eine Temperatur von vorzugsweise etwa 20°C bis 40°C aufweist. In der Mischeinrichtung 1 findet bereits eine erste Kondensation statt, wobei durch eine plötzliche Temperaturabsenkung des Sauergasstromes H₂O und NH₃ kondensiert werden. Es resultiert eine Mischung aus Flüssigkeit und Gas, die CO₂, H₂S und HCN als gasförmige Bestandteile mitführt. Die Gas/Flüssig-Mischung durchströmt den Kontaktapparat 4 und wird im Kontaktapparat 4 auf eine Temperatur von vorzugsweise weniger als 25°C gekühlt. Dabei werden ammoniakhaltige Bestandteile und Wasserdampf im Kontakt mit CO₂ kondensiert und es werden Ammoniumsalze, insbesondere Ammoniumbicarbonat gebildet. Die Ammoniumsalze werden als dispergierte Teilchen in der Strömung mitgeführt. Die aus Kondensat bestehende flüssige Phase und die als Feststoffe anfallenden Ammoniumsalze bilden eine Suspension, welche Kanäle des Kontaktapparates 4 durchströmen. Da die Ammoniumsalze mit dem Flüssigkeitsstrom mitgeführt werden, kommt es zu keinen Ablagerungen an den Kühlflächen des Kontaktapparates 4. Das mehrphasige Fluid, welches den Kontaktapparat verlässt, enthält als Hauptbestandteile CO₂, H₂S und HCN als Gasphase, eine flüssige Phase aus H₂O und NH₃ mit gelösten Ionen (CO₂, H₂S, HCN und NH₃) sowie dispergierte Feststoffteilchen aus Ammoniumbicarbonat (NH₄HCO₃). Das mehrphasige Fluid wird dem Flashbehälter zugeführt, wo die gasförmige Phase 6 von der Suspension (Fest/Flüssig-Phase) getrennt wird. Die aus dem Flashbehälter abgezogene gasförmige Phase 6 kann als Edukt in einem Claus-Prozess zur Schwefelerzeugung oder als Edukt zur Erzeugung von Schwefelsäure verwendet werden. Aus der Suspension werden die ungelösten Ammoniumsalze beispielsweise durch eine Sedimentationsabscheidung abgetrennt. Nach Abtrennung ungelöster Ammoniumsalze wird eine flüssige Phase 3 in den Prozess zurückgeführt und mit dem zu behandelnden Sauergasstrom 2 vermischt.

## Patentansprüche

1. Verfahren zur Behandlung von Sauergas aus Kokereien,
wobei ein Sauergasstrom (2) mit einer im Kreis geführten, durch Sauergaskondensat gebildeten Flüssigkeit (3) gemischt und auf eine Temperatur von weniger als 60°C gekühlt wird und dabei ammoniakhaltige Bestandteile und Wasserdampf im Kontakt mit CO₂ kondensiert und Ammoniumsalze gebildet werden,
wobei anschließend eine gasförmige Phase (6) abgetrennt wird, und
wobei eine flüssige Phase (3) nach Abtrennung ungelöster Ammoniumsalze zurückgeführt und mit dem zu behandelnden Sauergasstrom (2) vermischt wird, **dadurch gekennzeichnet, dass** die Vermischung des Sauergases (2) mit der zurückgeführten Flüssigkeit (3) in einem Injektor erfolgt.

2. Verfahren nach Anspruch 1, **dadurch gekennzeichnet, dass** das Sauergas (2) als Hauptbestandteile Wasserdampf, NH₃, CO₂, H₂S und HCN enthält, dass als feste Phase Ammoniumbicarbonat (NH₄HCO₃) abgetrennt wird und dass die gasförmige Phase (6) im Wesentlichen H₂S, CO₂ und HCN enthält.

3. Verfahren nach Anspruch 1 oder 2, **dadurch gekennzeichnet, dass** das Sauergas (2) als Kopfprodukt aus einer Desorptionskolonne abgezogen wird, in der eine zur Gaswäsche von Koksofengas verwendete Waschflüssigkeit durch Strippen mit Wasserdampf regeneriert wird.

4. Verfahren nach einem der Ansprüche 1 bis 3, **dadurch gekennzeichnet, dass** dem Injektor ein Durchströmreaktor nachgeschaltet ist, in dem Ammoniumsalze gebildet werden.

5. Verfahren nach Anspruch 4, **dadurch gekennzeichnet, dass** der durchströmte Reaktionsraum des Durchströmreaktors gekühlt wird.

6. Verfahren nach einem Ansprüche 1 bis 5, **dadurch gekennzeichnet, dass** das Sauergas (2) auf eine Temperatur von 20°C bis 40°C gekühlt wird.

7. Verfahren nach einem der Ansprüche 1 bis 6, **dadurch gekennzeichnet, dass** das aus Kondensat, festen Ammoniumsalzen und einer gasförmigen Phase bestehende mehrphasige Fluid einem Flashbehälter zugeführt wird, in dem die gasförmige Phase (6) von der flüssigen Phase getrennt wird.

8. Verfahren nach einem der Ansprüche 1 bis 7, **dadurch gekennzeichnet, dass** die Ammoniumsalze durch Sedimentation, Zentrifugieren, Zyklonabscheidung, Filtration oder durch einen zumindest zweistufigen Prozess unter Verwendung der vorgenannten Grundoperation abgetrennt werden.

9. Verfahren nach einem der Ansprüche 1 bis 8, **dadurch gekennzeichnet, dass** die gasförmige Phase (6) als Edukt in einem Claus-Prozess zur Schwefelerzeugung verwendet wird.

10. Verfahren nach einem der Ansprüche 1 bis 8, **dadurch gekennzeichnet, dass** die gasförmige Phase (6) als Edukt zur Erzeugung von Schwefelsäure verwendet wird.

11. Anlage zur Durchführung des Verfahrens nach einem der Ansprüche 1 bis 10, mit
einer Mischeinrichtung (1), die einen Gaseinlass für Sauergas (2) und einen Flüssigkeitsanschluss für die Zuführung einer im Kreis geführten Flüssigkeit aufweist,
einem der Mischeinrichtung (1) nachgeschalteten kühlbaren Kontaktapparat (4),
einem dem Kontaktapparat (4) nachgeschalteten Trennapparat (5) zur Abtrennung einer gasförmigen Phase (6), und
einer Einrichtung (7) zum Abtrennen von Feststoffen aus der flüssigen Phase,
wobei der Kontaktapparat (4) eine Gas/Flüssig-Phase enthält und innerhalb des Kontaktapparates Ammoniumsalze gebildet werden und wobei eine Einrichtung (13) zur Flüssigkeitsrückführung vorgesehen ist, welche die flüssige Phase (3) nach Abtrennen von ungelösten Ammoniumsalzen der Mischeinrichtung (1) zuführt, wobei die Mischeinrichtung (1) als Injektor ausgebildet ist.

12. Anlage nach Anspruch 11, **dadurch gekennzeichnet, dass** der Kontaktapparat (4) als Durchströmreaktor ausgebildet ist und einen von Wandflächen begrenzten Reaktionsraum aufweist, wobei die Wandflächen von einem Kühlmedium beaufschlagt sind.

13. Anlage nach einem der Ansprüche 11 bis 12, **dadurch gekennzeichnet, dass** der Trennapparat (5) zur Abtrennung einer gasförmigen Phase (6) als Flashbehälter ausgebildet ist.

14. Anlage nach Anspruch 13, **dadurch gekennzeichnet, dass** die Einrichtung (7) zum Abtrennen von Feststoffen aus der flüssigen Phase als Sedimentationsabscheider ausgebildet ist.

15. Anlage nach Anspruch 14, **dadurch gekennzeichnet, dass** der Flashbehälter einen als Sedimentationsabscheider ausgebildeten Flüssigkeitsraum (10, 11) aufweist, wobei an der Unterseite des Flüssigkeitsraums eine Suspension (10) mit hoher Feststoffkonstellation abziehbar ist und aus einer oberen Zone (11) des Flüssigkeitsraums eine geklärte Flüssigkeit abziehbar und der Mischeinrichtung (1) zuführbar ist.

## Claims

1. Process for treating acid gas from coke plants, wherein an acid gas stream (2) is mixed with a circulated liquid (3) formed by acid gas condensate and cooled to a temperature of below 60°C and in this case ammonia-containing components and steam are condensed in contact with CO₂ and ammonium salts are formed,
wherein subsequently a gaseous phase (6) is separated off and
wherein a liquid phase (3), after undissolved ammonium salts are separated off, is recirculated and mixed with the acid gas stream (2) that is to be treated, **characterized in that** the mixing of the acid gas (2) with the liquid (3) that is recirculated takes place in an injector.

2. Process according to Claim 1, **characterized in that** the acid gas (2) contains steam, NH₃, CO₂, H₂S and HCN as main components, **in that** ammonium bicarbonate (NH₄HCO₃) is separated off as solid phase, and **in that** the gaseous phase (6) substantially contains H₂S, CO₂ and HCN.

3. The process according to Claim 1 or 2, **characterized in that** the acid gas (2) is taken off as top product from a desorption column, in which a scrubbing liquid used for gas scrubbing of coke-oven gas is regenerated by stripping with steam.

4. Process according to any one of Claims 1 to 3, **characterized in that** a continuous-flow reactor is connected downstream of the injector, in which continuous-flow reactor ammonium salts are formed.

5. Process according to Claim 4, **characterized in that** the reaction space of the continuous-flow reactor through which flow passes is cooled.

6. Process according to any one of Claims 1 to 5, **characterized in that** the acid gas (2) is cooled to a temperature from 20°C to 40°C.

7. Process according to any one of Claims 1 to 6, **characterized in that** the multiphase fluid consisting of condensate, solid ammonium salts and a gaseous phase is fed to a flash vessel in which the gaseous phase (6) is separated from the liquid phase.

8. Process according to any one of Claims 1 to 7, **characterized in that** the ammonium salts are separated off by sedimentation, centrifugation, cyclone separation, filtration or an at least two-stage process using the abovementioned unit operation.

9. Process according to any one of Claims 1 to 8, **characterized in that** the gaseous phase (6) is used as a reagent in a Claus process for sulfur generation.

10. Process according to any one of Claims 1 to 8, **characterized in that** the gaseous phase (6) is used as a reagent for generating sulfuric acid.

11. Installation for carrying out the process according to any one of Claims 1 to 10, having
a mixing appliance (1) which has a gas intake for acid gas (2) and a liquid connection for feeding a circulated liquid,
a coolable contact apparatus (4) connected downstream of the mixing appliance (1),
a separation apparatus (5) connected downstream of the contact apparatus (4) for separating off a gaseous phase (6), and
an appliance (7) for separating off solids from the liquid phase,
wherein the contact apparatus (4) contains a gas/liquid phase and ammonium salts are formed within the contact apparatus, and wherein an appliance (13) for liquid recirculation is provided, which appliance feeds the liquid phase (3) to the mixing appliance (1) after undissolved ammonium salts are separated off, wherein the mixing appliance (1) is constructed as an injector.

12. Installation according to Claim 11, **characterized in that** the contact apparatus (4) is constructed as a continuous-flow reactor and has a reaction space that is delimited by wall surfaces, wherein the wall surfaces are exposed to a cooling medium.

13. Installation according to any one of Claims 11 to 12, **characterized in that** the separation apparatus (5) is constructed as a flash vessel to separate off a gaseous phase (6).

14. Installation according to Claim 13, **characterized in that** the appliance (7) for separating off solids from the liquid phase is constructed as a sedimentation separator.

15. Installation according to Claim 14, **characterized in that** the flash vessel has a liquid space (10, 11) constructed as a sedimentation separator, wherein a suspension (10) having a high solids concentration is withdrawable on the lower side of the liquid space, and a clarified liquid is withdrawable from an upper zone (11) of the liquid space and feedable to the mixing appliance (1).

## Revendications

1. Procédé de traitement de gaz acide issu de cokeries,
dans lequel on mélange un courant de gaz acide (2) avec un liquide (3) conduit en circuit et formé par un condensat de gaz acide et on le refroidit à une température inférieure à 60°C et on condense ainsi des composants contenant de l'ammoniac et de la vapeur d'eau en contact avec du CO₂ et on forme des sels d'ammonium,
dans lequel on sépare ensuite une phase gazeuse (6), et
dans lequel on recycle une phase liquide (3) après séparation des sels d'ammonium non dissous et on la mélange avec le courant de gaz acide à traiter (2), **caractérisé en ce que** l'on effectue le mélange du gaz acide (2) avec le liquide recyclé (3) dans un injecteur.

2. Procédé selon la revendication 1, **caractérisé en ce que** le gaz acide (2) contient comme constituants principaux de la vapeur d'eau, du NH₃, du CO₂, du H₂S et du HCN, **en ce que** l'on sépare le bicarbonate d'ammonium (NH₄HCO₃) comme phase solide et **en ce que** la phase gazeuse (6) contient essentiellement du H₂S, du CO₂ et du HCN.

3. Procédé selon la revendication 1 ou 2, **caractérisé en ce que** l'on aspire le gaz acide (2) comme produit de tête à partir d'une colonne de désorption, dans laquelle on régénère un liquide de lavage utilisé pour le lavage de gaz de four à coke par stripping à la vapeur d'eau.

4. Procédé selon l'une quelconque des revendications 1 à 3, **caractérisé en ce qu'**un réacteur à traversée, dans lequel on forme des sels d'ammonium, est disposé après l'injecteur.

5. Procédé selon la revendication 4, **caractérisé en ce que** l'on refroidit la chambre de réaction traversée du réacteur à traversée.

6. Procédé selon l'une quelconque des revendications 1 à 5, **caractérisé en ce que** l'on refroidit le gaz acide (2) à une température de 20°C à 40°C.

7. Procédé selon l'une quelconque des revendications 1 à 6, **caractérisé en ce que** l'on envoie le fluide polyphasique composé de condensat, de sels d'ammonium solides et d'une phase gazeuse à un récipient flash, dans lequel on sépare la phase gazeuse (6) de la phase liquide.

8. Procédé selon l'une quelconque des revendications 1 à 7, **caractérisé en ce que** l'on sépare les sels d'ammonium par sédimentation, centrifugation, séparation par cyclone, filtration ou par un processus en au moins deux étapes avec utilisation de l'opération de base précitée.

9. Procédé selon l'une quelconque des revendications 1 à 8, **caractérisé en ce que** l'on utilise la phase gazeuse (6) comme éduit dans un processus Claus pour la production de soufre.

10. Procédé selon l'une quelconque des revendications 1 à 8, **caractérisé en ce que** l'on utilise la phase gazeuse (6) comme éduit pour la production d'acide sulfurique.

11. Installation pour la mise en oeuvre du procédé selon l'une quelconque des revendications 1 à 10, avec
un dispositif de mélange (1), qui présente une entrée de gaz pour du gaz acide (2) et un raccord de liquide pour la fourniture d'un liquide conduit en circuit,
un appareil de contact pouvant être refroidi (4) installé après le dispositif de mélange (1),
un appareil de séparation (5) installé après l'appareil de contact (4) pour la séparation d'une phase gazeuse (6), et
un dispositif (7) pour séparer des substances solides hors de la phase liquide,
dans laquelle l'appareil de contact (4) contient une phase gaz/liquide et des sels d'ammonium sont formés à l'intérieur de l'appareil de contact, et dans laquelle il est prévu un dispositif (13) pour le recyclage de liquide, qui envoie la phase liquide (3) au dispositif de mélange (1) après séparation de sels d'ammonium non dissous, dans laquelle le dispositif de mélange (1) est constitué par un injecteur.

12. Installation selon la revendication 11, **caractérisée en ce que** l'appareil de contact (4) est formé par un réacteur à traversée et présente une chambre de réaction limitée par des faces de paroi, dans laquelle les faces de paroi sont exposées à un fluide de refroidissement.

13. Installation selon une des revendications 11 à 12, **caractérisée en ce que** l'appareil de séparation (5) pour la séparation d'une phase gazeuse (6) est réalisé sous la forme d'un récipient flash.

14. Installation selon la revendication 13, **caractérisée en ce que** le dispositif (7) pour séparer des substances solides hors de la phase liquide est réalisé sous la forme d'un séparateur par sédimentation.

15. Installation selon la revendication 14, **caractérisée en ce que** le récipient flash présente une chambre de liquide (10, 11) réalisée comme séparateur par sédimentation, dans laquelle une suspension (10) avec une haute concentration de substances solides peut être soutirée au côté inférieur de la chambre de liquide et un liquide clarifié peut être soutiré hors d'une zone supérieure (11) de la chambre de liquide et envoyé au dispositif de mélange (1).
